# EUROPÄISCHE PATENTSCHRIFT

(11) **EP 3 013 698 B1**
(45) Veröffentlichungstag und Bekanntmachung des Hinweises auf die Patenterteilung: **01.03.2017**
(21) Anmeldenummer: 14729351.8
(22) Anmeldetag: 11.06.2014
(51) Int. Cl.: B65B 51/30, B29C 65/74, B65B 61/08

(54) **TRENNWERKZEUG EINER FÜGEVORRICHTUNG FÜR FLEXIBLE VERPACKUNGEN**
SEPARATING TOOL OF A JOINING DEVICE FOR FLEXIBLE PACKAGINGS
OUTIL DE DÉCOUPAGE D'UN DISPOSITIF D'ASSEMBLAGE POUR EMBALLAGES FLEXIBLES

(30) Priorität: 28.06.2013 DE 102013212722
(43) Veröffentlichungstag der Anmeldung: 04.05.2016
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE)
(86) Internationale Anmeldenummer: PCT/EP2014/062149
(87) Internationale Veröffentlichungsnummer: WO 2014/206738

(56) Entgegenhaltungen:
- US-A- 3 384 528
- US-A- 3 703 841

## Beschreibung

### Stand der Technik

Die vorliegende Erfindung betrifft ein Trennwerkzeug einer Fügevorrichtung für flexible Verpackungen, insbesondere für Schlauchbeutelmaschinen, bei welchen eine Siegelung mittels Ultraschall erfolgt.

Aus dem Stand der Technik sind horizontale Schlauchbeutelmaschinen bekannt, bei denen die Packstoffe mittels konventioneller Fügeverfahren oder alternativer Fügeverfahren, wie z.B. Ultraschall, miteinander verbunden werden, wobei zusätzlich zum Fügen auch ein Trennen der Verpackung durchgeführt wird. Somit wird bei Schlauchbeutelverpackungen der Packstoffschlauch in einzelne Schlauchbeutel geteilt.

Die US 3 703 841 A zeigt einen Trennwerkzeug einer Schlauchbeutelmaschine.

Der Trennvorgang findet bei der konventionellen, rotativen Heiß- oder Kaltsiegelung und bei der rotativen Ultraschallsiegelung zwischen Ober- und Unterwalze statt. Daher werden die Schneidmesser üblicherweise durch stirnseitige oder seitliche Klemmschrauben im Schneidspalt eines Fügewerkzeuges fixiert.

Besonders beim Ultraschallsiegeln auf horizontalen Schlauchbeutelmaschinen kommt es beim Siegeln der Kopf- oder Fußnaht sowie beim Schneidvorgang zur Übertragung der Ultraschallfrequenzen auf passiv schwingende Bauteile, wie z.B. das Schneid- oder Quetschmesser. Diese Ankopplung der Erregerfrequenz führt an den freien Längen zwischen den Einspannungen zu Eigenfrequenzen, die unter Einwirkung der Quetsch- oder Schneidkraft zu einem Bauteilversagen führen können. Die Standzeit der Messer wird somit nicht durch einen Verschleiß an der Schneidengeometrie, sondern durch ein Bauteilversagen mittels Messerbruch limitiert.

Weiterhin sind Schneidverfahren bekannt, welche kraftbeaufschlagte Stech- oder Schlagmesser verwenden. Bei diesen Verfahren werden die Schneidkraft und die Schnittgeschwindigkeit mit Hilfe von Pneumatik, Hydraulik, Kurbelantrieb usw., erzeugt.

### Offenbarung der Erfindung

Die vorliegende Erfindung betrifft somit ein Trennwerkzeug einer Fügevorrichtung für flexible Verpackungen, insbesondere für Schlauchbeutelmaschinen, mit einem Messerträger, welcher eine nutartige Ausnehmung aufweist, in welcher ein Messer angeordnet ist. Erfindungsgemäß ist dabei vorgesehen, dass zumindest ein Teil einer Wandung der Ausnehmung in Form eines sich über die Länge des Messers erstreckenden und angrenzend an den Fußbereich der Ausnehmung einstückig mit dem Messerträger verbundenen Biegebalkens ausgebildet ist und dass an dem Messerträger Klemmschrauben angeordnet sind, welche in Gewindeausnehmungen des Messerträgers gelagert sind und den Biegebalken in Richtung des Messers zu dessen Klemmung vorspannen. Die vorliegende Erfindung sieht somit vor, dass die Klemmschrauben nicht direkt auf das Messer einwirken, sondern gegen den Biegebalken wirken, welcher wiederum das Messer klemmt. Dies führt zu einer großflächigen Kontaktierung zwischen dem Messer und dem Biegebalken. Hierdurch ergibt sich eine Schwingungsentkoppelung (Entkopplung des Messers von der Eigenfrequenz der Ultraschallsonotrode), welche sich erheblich vom Stand der Technik unterscheidet. Bei den aus dem Stand der Technik bekannten Vorrichtungen ist es bekannt, eine Vielzahl von Klemmschrauben zu verwenden. Diese führen zu einer statischen Überbestimmung und bringen den Nachteil mit sich, dass sich die Schrauben durch die Schwingungsbeaufschlagung, insbesondere durch den beim Fügen verwendeten Ultraschall, lockern können. Demgegenüber ist es erfindungsgemäß möglich, mit zumindest zwei Klemmschrauben eine zuverlässige Fixierung des Messers zu bewirken. Das erfindungsgemäße Befestigungsprinzip für Schneid- oder Quetschmesser bei rotativen Ultraschallsiegeleinrichtungen eliminiert die von der Erregerfrequenz erzeugten Eigenfrequenzen im Bauteil. Es können je nach Anzahl der Siegelstollen ein bis mehrere Schneidvorrichtungen auf einer rotativen Ultraschalleinrichtung platziert werden. Die Erfindung ermöglicht das einfache, verschleißfreie Schneiden und Vereinzeln von Produkten, wie z. B. Schlauchbeuteln aus einem Packstoffschlauch, welche auch bei einer rotativen Heiß-, Kalt- oder Ultraschallsiegelung eingesetzt werden können. Die neuartige Befestigung führt zu einer wesentlichen Erhöhung der Standzeit der Schneid- oder Quetschmesser. Die Schwingungsentkopplung ist unabhängig von der Erregerfrequenz, welche beispielsweise im Bereich von 20 bis 40 kHz liegt, da mittel der Einspannung des Bauteils über die gesamte Länge, keine Eigenschwingungen auftreten, die zum Bauteilversagen führen können. Für eine wirkungsvolle Versteifung des Schneid-oder Quetschmessers sind beim Stand der Technik bei einer Erregerfrequenz von 30 KHz mindestens sechs Klemmschrauben notwendig. Ein großer Vorteil der Erfindung ist, dass für die ganzflächige Klemmung, wie beim Heißsiegelverfahren, nur zwei Klemmschrauben notwendig sind. Die Klemmschrauben benötigen keine zusätzliche Schraubensicherung, da keine Eigenfrequenzen im zu klemmenden Bauteil auftreten. Erfindungsgemäß wird das Schneid- oder Quetschmesser somit ganzflächig mittels des Biegebalkens geklemmt, so dass keine freien Längen des Messers zum Schwingen in Eigenfrequenzen angeregt werden können. Die Befestigung des Schneid- oder Quetschmessers erfolgt somit schwingungsentkoppelt. Durch die erfindungsgemäß vorgesehene Konstruktion werden die Eigenfrequenzen in höhere Bereiche gegenüber der Erregerfrequenz verschoben. Die erfindungsgemäße Lösung sieht somit eine Versteifung der gesamten Trennwerkzeug-Konstruktion vor, durch welche die Eigenfrequenzen entkoppelt werden.

Die Unteransprüche zeigen bevorzugte Weiterbildungen der Erfindung.

In bevorzugter Weiterbildung der Erfindung ist vorgesehen, dass die bevorzugt zumindest zwei Klemmschrauben voneinander und von den Enden des Biegebalkens beabstandet sind. Die Klemmschrauben können somit, bezogen auf die Länge des Messers bzw. des Biegebalkens, die freien Längen, angrenzend an die jeweilige Schraube, gleichmäßig ausbilden.

Besonders günstig ist es, wenn das Messer im Wesentlichen dieselbe Länge aufweist, wie der Messerträger. Gleiches gilt für den Biegebalken. Das Messer liegt somit über seine gesamte Länge gegen den Biegebalken und gegen den Messerträger an und wird von beiden geklemmt und somit zuverlässig gehaltert.

Eine besonders vorteilhafte Einsatzmöglichkeit für den erfindungsgemäßen Messerträger ergibt sich bei einer horizontalen Schlauchbeutelmaschine mit einer rotierend bewegbaren Schneidvorrichtung. Dabei kann eine Quersiegelvorrichtung mit beispielsweise vier Siegelstollen vorgesehen sein, welche um eine horizontale Achse drehbar ist und mit einem ebenfalls um eine horizontale Achse drehbaren Gegenrad zusammenwirkt.

In besonders günstiger Weiterbildung der Erfindung ist vorgesehen, dass der Biegebalken angrenzend an den Fußbereich der Ausnehmung, in welcher das Messer aufgenommen ist, ausgebildet ist und sich zumindest über einen Teil der Höhe der nutartigen Ausnehmung erstreckt. Durch eine derartige Ausgestaltung wird ein in seiner Höhe ausreichend dimensionierter Biegebalken geschaffen, welcher zur Klemmung des Messers ausreichend verformbar ist. In besonders günstiger Weiterbildung der Erfindung ist weiterhin vorgesehen, dass das Messer am unteren Bereich der nutartigen Ausnehmungen beidseitig gegen die Wandungen der Ausnehmung anliegt. Das Messer befindet sich somit in einem festen Sitz innerhalb der Ausnehmung und wird zusätzlich durch die Klemmvorrichtung mittels des Biegebalkens und der Klemmschrauben fixiert.

In einer weiteren, besonders günstigen Ausgestaltung der Erfindung ist vorgesehen, dass in dem Messträger ein den freien Bereich des Biegebalkens umgebender Spalt ausgebildet ist. Dieser Spalt kann beispielsweise durch Drahterodieren erzeugt werden. Somit ist es möglich, den Biegebalken einstückig mit dem Messerträger auszubilden und zugleich eine Biegbarkeit oder Verformbarkeit des Biegebalkens mittels der Klemmschrauben sicherzustellen.

Um eine wirkungsvolle Schwingungsentkoppelung zu gewährleisten, ist es besonders vorteilhaft, wenn das Messer ganzflächig in dem Messerträger geklemmt ist. Hierdurch wird vermieden, dass einzelne Bereiches des Messers in Eigenschwingungen versetzt werden können.

Erfindungsgemäß ist das Messer schwingungsentkoppelt in dem Messerträger geklemmt. Abhängig von der Frequenz der Ultraschall-Fügevorrichtung kann somit das Messer so dimensioniert und ausgebildet werden, dass es für die zu erzeugenden Schlauchbeutelverpackungen passend ist, wobei eine Optimierung der gesamten Siegeleinrichtung hinsichtlich der Ultraschallfrequenz erfolgen und die Dimensionierung des Messers hierbei eine untergeordnete Rolle spielt.

In besonders günstiger Ausgestaltung der Erfindung ist vorgesehen, dass die Fügevorrichtung als Ultraschall-Fügevorrichtung ausgebildet ist. Es sind jedoch auch andere Fügeprinzipien möglich, beispielsweise auch eine Anregung in einem anderen Frequenzbereich, als dem üblichen Ultraschall-Frequenzbereich.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
Figur 1 eine schematische Seitenansicht eines Ausführungsbeispiels des erfindungsgemäßen Trennwerkzeugs,
Figur 2 eine schematische Ansicht auf die Längsseite der in Figur 1 dargestellten Anordnung,
Figur 3 eine detaillierte Ansicht eines Ausführungsbeispiels, analog Figur 1,
Figur 4 eine schematische Darstellung der Funktionsweise und Applikation des erfindungsgemäßen Trennwerkzeugs, und
Figur 5 eine vereinfachte perspektivische Detailansicht der in Figur 4 gezeigten Anordnung.

### Ausführungsformen der Erfindung

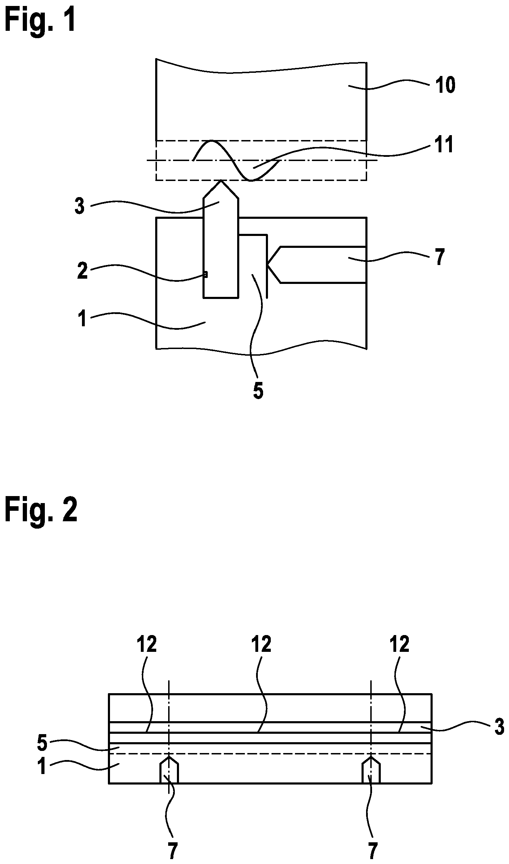

Die Figur 1 zeigt eine schematische Seitenansicht des erfindungsgemäßen Trennwerkzeugs. Dieses umfasst einen Messerträger 1, in welchem eine nutartige Ausnehmung 2 ausgebildet ist. In dieser ist ein Messer 3 angeordnet, welches als Schneidmesser oder Quetschmesser ausgebildet sein kann. Aus der Darstellung der Figur 1 ist ersichtlich, dass das Messer 3 mit seinen Seitenflächen ganzflächig in direktem Kontakt in der nutartigen Ausnehmung 2 aufgenommen ist.

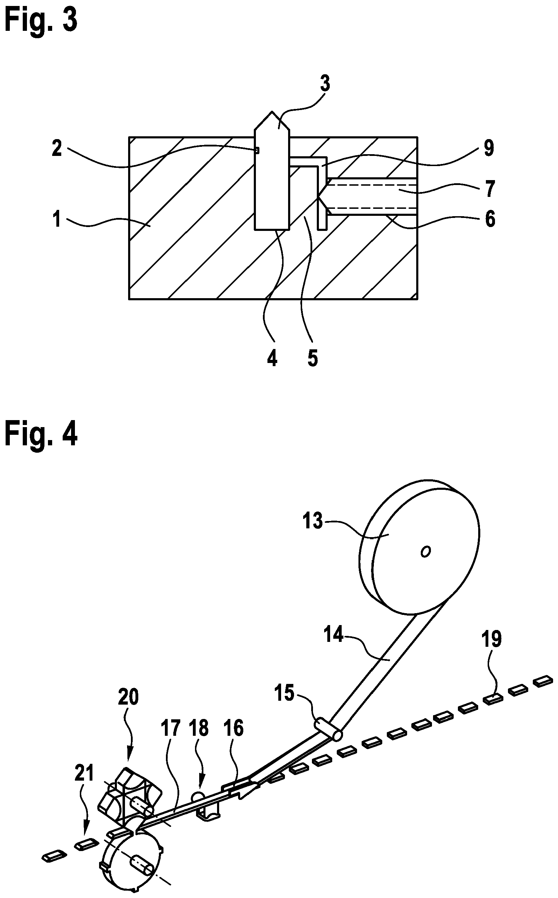

Eine der Wandungen der nutartigen Ausnehmung 2 wird durch einen Biegebalken 5 gebildet, welcher an seinem, bezogen auf die Darstellung der Figur 1, unteren Bereich einstückig mit dem Messerträger 1 verbunden ist. In dem Messerträger 1 ist mittels einer Gewindeausnehmung 6 (s. Figur 3) eine Klemmschraube 7 gelagert. Durch Eindrehen der Klemmschraube 7 gelangt diese in Kontakt gegen den Biegebalken 5 und verformt diesen, so dass in der Folge das Messer 3 in der nutartigen Ausnehmung 2 des Messerträgers 1 geklemmt wird.

Die Figur 1 zeigt in schematischer Darstellung weiterhin eine Sonotrode 10, welche dem Messer 3 gegenüberliegend angeordnet ist. Weiter ist schematisch eine Ultraschallschwingung 11 dargestellt, welche zum Fügen von im Einzelnen nicht dargestellten flexiblen Verpackungen einer Schlauchbeutelmaschine dient.

Die Figur 2 zeigt eine Seitenansicht auf die in Figur 1 dargestellte Anordnung. Hierbei ist ersichtlich, dass zwei Klemmschrauben 7 vorgesehen sind, um mittels des Biegebalkens 5 das Messer 3 zu klemmen. Das Bezugszeichen 12 zeigt die freien Längen zwischen den Klemmschrauben 7.

Die Figur 3 zeigt eine detailliertere Seitenansicht analog Figur 1. Dabei ist insbesondere ersichtlich, dass der Biegebalken 5 am Fußbereich einstückig mit dem Messerträger 1 verbunden ist. Die seitliche und die obere Flanke des Biegebalkens 5 werden durch einen Spalt begrenzt, welcher beispielsweise durch Drahterodieren hergestellt ist. Die Figur 3 zeigt weiterhin, dass das Messer 3 gegen den Fußbereich 4 der Ausnehmung 2 anliegt und sich somit in ganzflächigem Kontakt mit dem Messerträger 1 befindet. Wie sich insbesondere aus der Zusammenschau der Figuren 2 und 3 ergibt, weist der Biegebalken 5 im Wesentlichen die gleiche Länge auf, wie der Messerträger 1 und das Messer 3.

Die Funktionsweise und Applikation des erfindungsgemäßen Trennwerkzeugs für die Längs- und Quernaht auf einer HFFS-Maschine ist in Figur 4 dargestellt. Von einer Packstoffrolle 13 wird eine Packstoffbahn 14 über eine Leitwalze 15 geführt und über einen Formschuh 16 zu einem Packstoffschlauch 17 geformt. Danach wird mit einer Längssiegeleinrichtung 18 eine Finn- oder Überlappnaht gefügt. Die Produkte 19 werden, nachdem diese von der Packgutkette dem Packstoffschlauch 17 zugeführt worden sind, mittels Reibung zwischen Produkt und Packstoff bis zur Quersiegelung 20 mit Trennfunktion weitertransportiert. Die Quersiegelvorrichtung 20 fügt die zwei Quersiegelnähte des Schlauchbeutels und führt zwischen den Siegelungen auch die Vereinzelungsfunktion 21 mittels Trennen durch.

Die Sonotrode kann bei diesem Ausführungsbeispiel direkt an der Fügestelle befestigt werden, jedoch sind auch beliebige andere Befestigungsmöglichkeiten am Schallleiter möglich. Ein Amboss mit Energierichtungsgeber ist für die Ausbildung der Fügenaht nicht erforderlich, da das Aufschmelzen der Siegelschichten an der Verbindungsstelle hauptsächlich durch den Wärmespot erfolgt. Die Erfindung ist jedoch auch für konventionellen Ultraschall einsetzbar.

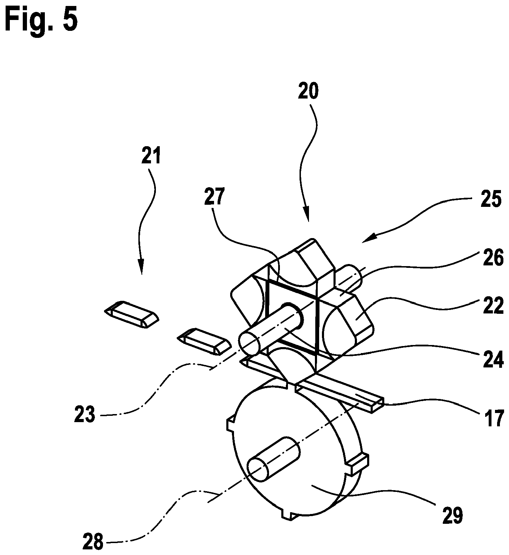

In Figur 5 ist die Siegeleinrichtung für die Quernähte im Detail dargestellt.

In der gezeigten Ausführungsvariante der Quersiegelvorrichtung 20 sind vier Siegelstollen in Form von keilförmigen Schallleitern 22 auf einer um eine Achse 23 drehbaren Grundwelle 24 vorgesehen. Die Ausführungsvarianten können von einem bis acht Siegelstollen variieren und auch eine ungerade Anzahl von Schallleitern aufweisen. Eine Befestigung 25 einer Fokussiereinrichtung 26 mit der Welle 24 und dem Schallleiter 22 kann sowohl kraft- oder formschlüssiger Art sein. Die Schwingungen werden von einem Schallerzeuger/Piezokeramik 27 über die Fokussiereinrichtung 26 mittels des Schallleiters 22 in eine Wärmelinie gewandelt Diese Wärmelinie erzeugt den für den Siegelvorgang notwendigen Temperatureintrag in die Fügematerialien. Mit Hilfe eines um eine Achse 28 drehbaren Gegenrades 29 (rotative Gegenhaltereinrichtung) wird der für den Fügevorgang notwendige Fügedruck aufgebracht und gleichzeitig die für den Trennvorgang entsprechende Quetsch oder Schneidkraft erzeugt.

Ein Packstoffschlauch mit Produkt 17 wird der synchron um eine Achse 28 rotierenden Sonotroden- und Gegenhaltereinheit 29 zugeführt. Zuerst wird die Kopfnaht des voreilenden Schlauchbeutels 21 gebildet. Danach erfolgt die Trennfunktion und im weiteren Abrollen der Siegelstollen wird die Fußnaht des nacheilenden Schlauchbeutels 21 gebildet.

## Patentansprüche

1. Trennwerkzeug einer Fügevorrichtung, insbesondere für Schlauchbeutelmaschinen, mit einem Messerträger (1), welcher eine nutartige Ausnehmung (2) aufweist, in welcher ein Messer (3) angeordnet ist, **dadurch gekennzeichnet, dass** zumindest ein Teil einer Wandung der Ausnehmung (2) in Form eines sich über die Länge des Messers (3) erstreckenden und angrenzend an den Fußbereich (4) der Ausnehmung (2) einstückig mit dem Messerträger (1) verbundenen Biegebalkens ausgebildet ist und dass an dem Messerträger (1) zumindest zwei, den Biegebalken (5) in Richtung des Messers (3) zu dessen Klemmung vorspannende, in Gewindeausnehmungen (6) des Messerträgers (1) gelagerte Klemmschrauben (7) angeordnet sind.

2. Trennwerkzeug nach Anspruch 1, **dadurch gekennzeichnet, dass** die Klemmschrauben (7) voneinander und von den Enden des Biegebalkens (5) beabstandet sind.

3. Trennwerkzeug nach Anspruch 1 oder 2, **dadurch gekennzeichnet, dass** das Messer (3) im Wesentlichen dieselbe Länge wie der Messerträger (1) aufweist.

4. Trennwerkzeug nach einem der Ansprüche 1 bis 3, **dadurch gekennzeichnet, dass** der Messerträger (1) an einer rotierend bewegbaren Schneidvorrichtung (8) angeordnet ist.

5. Trennwerkzeug nach einem der Ansprüche 1 bis 4, **dadurch gekennzeichnet, dass** der Biegebalken (5) angrenzend an den Fußbereich (4) der Ausnehmung (2) ausgebildet ist und sich zumindest über einen Teil der Höhe der nutartigen Ausnehmung (2) erstreckt.

6. Trennwerkzeug nach einem der Ansprüche 1 bis 5, **dadurch gekennzeichnet, dass** das Messer (3) am unteren Bereich der nutartigen Ausnehmung (2) beidseitig gegen die Wandungen der Ausnehmung (3) anliegt.

7. Trennwerkzeug nach einem der Ansprüche 1 bis 6, **dadurch gekennzeichnet, dass** in dem Messerträger (1) ein den freien Bereich des Biegebalkens (5) umgebender Spalt (9) ausgebildet ist.

8. Trennwerkzeug nach einem der Ansprüche 1 bis 7, **dadurch gekennzeichnet, dass** das Messer (3) ganzflächig in dem Messerträger (1) geklemmt ist.

9. Trennwerkzeug nach einem der Ansprüche 1 bis 8, **dadurch gekennzeichnet, dass** das Messer (3) schwingungsentkoppelt in dem Messerträger (1) geklemmt ist.

10. Trennwerkzeug nach einem der Ansprüche 1 bis 9, **dadurch gekennzeichnet, dass** die Fügevorrichtung als Ultraschall-Fügevorrichtung ausgebildet ist.

## Claims

1. Separating tool of a joining device, in particular for tubular bag machines, having a blade carrier (1) which has a groove-type clearance (2) in which a blade (3) is disposed, **characterized in that** at least part of a wall of the clearance (2) is configured in the form of a flexing beam which extends across the length of the blade (3) and, adjacent to the base region (4) of the clearance (2), is integrally connected to the blade carrier (1), and **in that** at least two clamping screws (7) which are mounted in threaded clearances (6) of the blade carrier (1) are disposed on the blade carrier (1), said at least two clamping screws (7) biasing the flexing beam (5) in the direction of the blade (3), in order for the latter to be clamped.

2. Separating tool according to Claim 1, **characterized in that** the clamping screws (7) are mutually spaced apart, and are spaced apart from the ends of the flexing beam (5).

3. Separating tool according to Claim 1 or 2, **characterized in that** the blade (3) has substantially the same length as the blade carrier (1).

4. Separating tool according to one of Claims 1 to 3, **characterized in that** the blade carrier (1) is disposed on a rotatably movable cutting device (8) .

5. Separating tool according to one of Claims 1 to 4, **characterized in that** the flexing beam (5) is configured adjacent to the base region (4) of the clearance (2), and extends at least across part of the height of the groove-type clearance (2).

6. Separating tool according to one of Claims 1 to 5, **characterized in that** the blade (3) on the lower region of the groove-type clearance (2) bears against the walls on both sides of the clearance (3) .

7. Separating tool according to one of Claims 1 to 6, **characterized in that** a gap (9) which surrounds the free region of the flexing beam (5) is configured in the blade carrier (1).

8. Separating tool according to one of Claims 1 to 7, **characterized in that** the blade (3) is clamped in a fully planar manner in the blade carrier (1).

9. Separating tool according to one of Claims 1 to 8, **characterized in that** the blade (3) is clamped in the blade carrier (1) so as to be decoupled from vibrations.

10. Separating tool according to one of Claims 1 to 9, **characterized in that** the joining device is configured as an ultrasonic joining device.

## Revendications

1. Outil de découpage d'un dispositif d'assemblage, en particulier pour machines de fabrication de sachets flexibles, comprenant un support de couteau (1) qui présente un évidement (2) en forme de rainure dans lequel est disposé un couteau (3), **caractérisé en ce qu'**au moins une partie d'une paroi de l'évidement (2) est réalisée sous la forme d'une poutre flexible s'étendant sur la longueur du couteau (3) et connectée d'une seule pièce au support de couteau (1) en position adjacente à la zone d'assemblage (4) de l'évidement (2) et **en ce qu'**au moins deux vis de serrage (7) appliquant une précontrainte à la poutre flexible (5) dans la direction du couteau (3) en vue de son serrage, supportées dans des évidements filetés (6) du support de couteau (1), sont disposées sur le support de couteau (1).

2. Outil de découpage selon la revendication 1, **caractérisé en ce que** les vis de serrage (7) sont espacées l'une de l'autre et des extrémités de la poutre flexible (5).

3. Outil de découpage selon la revendication 1 ou 2, **caractérisé en ce que** le couteau (3) présente essentiellement la même longueur que le support de couteau (1).

4. Outil de découpage selon l'une quelconque des revendications 1 à 3, **caractérisé en ce que** le support de couteau (1) est disposé au niveau d'un dispositif de coupe (8) pouvant être déplacé en rotation.

5. Outil de découpage selon l'une quelconque des revendications 1 à 4, **caractérisé en ce que** la poutre flexible (5) est réalisée en position adjacente à la zone d'assemblage (4) de l'évidement (2) et s'étend au moins sur une partie de la hauteur de l'évidement en forme de rainure (2).

6. Outil de découpage selon l'une quelconque des revendications 1 à 5, **caractérisé en ce que** le couteau (3) s'applique au niveau de la zone inférieure de l'évidement de type rainure (2) des deux côtés contre les parois de l'évidement (3).

7. Outil de découpage selon l'une quelconque des revendications 1 à 6, **caractérisé en ce qu'**une fente (9) entourant la zone libre de la poutre flexible (5) est réalisée dans le support de couteau (1).

8. Outil de découpage selon l'une quelconque des revendications 1 à 7, **caractérisé en ce que** le couteau (3) est inséré sur toute sa surface dans le support de couteau (1).

9. Outil de découpage selon l'une quelconque des revendications 1 à 8, **caractérisé en ce que** le couteau (3) est serré dans le support de couteau (1) de manière désaccouplée vis-à-vis des oscillations.

10. Outil de découpage selon l'une quelconque des revendications 1 à 9, **caractérisé en ce que** le dispositif d'assemblage est réalisé sous forme de dispositif d'assemblage à ultrasons.
